# FASCICULE DE BREVET EUROPEEN

(11) **EP 3 491 444 B1**
(45) Date de publication et mention de la délivrance du brevet: **04.08.2021**
(21) Numéro de dépôt: 17736613.5
(22) Date de dépôt: 28.06.2017
(51) Int. Cl.: G02B 19/00, G02B 7/00, G03B 21/16, G03B 21/20, G03B 21/00, G02B 27/01

(54) **DISPOSITIF DE GÉNÉRATION D'IMAGES ET AFFICHEUR TÊTE HAUTE ASSOCIÉ**
BILDERZEUGUNGSVORRICHTUNG UND ZUGEHÖRIGE HEAD-UP-ANZEIGE
IMAGE GENERATING DEVICE AND ASSOCIATED HEAD-UP DISPLAY

(30) Priorité: 29.06.2016 FR 1656141
(43) Date de publication de la demande: 05.06.2019
(73) Titulaire: Valeo Comfort and Driving Assistance, 94046 Créteil Cedex (FR)
(72) Inventeur: BARATE, David, 94046 Créteil Cedex (FR)
(74) Mandataire: Delplanque, Arnaud
(86) Numéro de dépôt international: PCT/EP2017/066073
(87) Numéro de publication internationale: WO 2018/002188

(56) Documents cités:
- WO-A1-2015/159030
- FR-A1- 2 996 905
- FR-A1- 3 004 238
- US-A1- 2004 062 040

## Description

### DOMAINE TECHNIQUE AUQUEL SE RAPPORTE L'INVENTION

La présente invention concerne de manière générale le domaine des afficheurs tête haute pour véhicule.

Elle concerne plus particulièrement un dispositif de génération d'images pour afficheur tête haute comprenant au moins une source de lumière, un écran adapté à être rétroéclairé par ladite source de lumière, et un réflecteur, disposé entre ladite source de lumière et ledit écran, et adapté à réfléchir au moins en partie la lumière émise par la source de lumière.

### ARRIÈRE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer des images et un dispositif de projection des images générées adapté à transmettre ces images vers une lame semi-transparente placée dans le champ de vision du conducteur.

La plupart des dispositifs de génération d'images utilisés aujourd'hui comprennent une source de lumière rétroéclairant un écran adapté à générer les images. Cet écran absorbe une partie de la lumière qui le rétroéclaire, ce qui provoque son échauffement thermique.

Or, la température de l'écran est critique pour son bon fonctionnement, ce dernier risquant d'être endommagé, voire d'être rendu défectueux, par une température trop élevée. L'échauffement de l'écran peut par conséquent réduire sa durée de vie et conduire à son remplacement.

Il est donc nécessaire de trouver des solutions visant à refroidir l'écran, ou à éviter son échauffement.

On sait que la température de l'écran est en grande partie liée à l'échauffement créé par la source de lumière qui le rétroéclaire.

On connaît ainsi une première solution consistant à placer une sonde de température dans le dispositif de génération d'images, cette sonde étant adaptée à contrôler la température de l'écran et à réguler automatiquement, en fonction de cette température, la puissance générée par la source de lumière.

Cette première solution présente un inconvénient majeur en ce que l'utilisateur n'obtient pas toujours un affichage avec le niveau de luminosité souhaité puisque la source de lumière peut être amenée à fonctionner à puissance réduite.

En outre, du fait de la sonde, cette première solution n'est pas optimale en termes d'encombrement du dispositif de génération d'images.

On connaît également une deuxième solution consistant à ouvrir, au moins partiellement, le dispositif de génération d'images afin d'évacuer la chaleur générée par le rayonnement lumineux de la source de lumière.

Néanmoins, cette deuxième solution ne garantit pas l'étanchéité du dispositif de génération d'images aux poussières. Ainsi, les optiques contenues dans le dispositif de génération d'images sont exposées aux poussières et risquent d'être détériorées.

En outre, cette deuxième solution implique que des fuites de lumière sont possibles depuis la source de lumière vers les autres éléments de l'afficheur tête haute. D'éventuels rayons parasites peuvent ainsi être générés dans l'ensemble de l'afficheur tête haute et la qualité finale de l'image générée est affectée. Le document WO 2015/159030 propose également une solution d'évacuation de la chaleur générée par la source lumineuse.

### OBJET DE L'INVENTION

Afin de remédier aux inconvénients précités de l'état de la technique, la présente invention propose un dispositif de génération d'images conçu pour refroidir l'écran qu'il comprend et/ou éviter l'échauffement dudit écran.

Plus particulièrement, on propose selon l'invention un dispositif de génération d'images (pour afficheur tête haute) comprenant au moins une source de lumière, un écran adapté à être rétroéclairé par ladite source de lumière, et un réflecteur disposé entre ladite source de lumière et ledit écran de sorte qu'une face interne dudit réflecteur réfléchisse au moins en partie la lumière émise par la source de lumière, dans lequel le réflecteur présente une conductivité thermique supérieure à 1 W.m⁻¹.K⁻¹.

Ainsi, le réflecteur est adapté à évacuer, par effet de conduction thermique, un surplus de chaleur du dispositif de génération d'images, par exemple vers des éléments de dissipation thermique tels que des ailettes de dissipation thermique, comme proposé plus loin.

En outre, de manière avantageuse, le réflecteur définit un logement conçu pour recevoir l'écran de sorte que ledit réflecteur présente une zone de contact thermique avec ledit écran.

Ainsi, le réflecteur étant en contact thermique avec l'écran, il est tout particulièrement adapté à conduire et/ou à dissiper la chaleur contenue dans l'écran.

En outre, le réflecteur définissant un logement de réception de l'écran, il permet un gain de place du dispositif de génération d'images.

D'autres caractéristiques non limitatives et avantageuses du dispositif conforme à l'invention sont les suivantes :
- le réflecteur s'étend selon un axe principal d'extension et comporte une portion de réflexion et une portion de support ;
- la portion de support définit ledit logement conçu pour recevoir l'écran et comporte un méplat et un rebord qui s'élève à partir dudit méplat de manière à entourer l'écran ;
- ledit méplat forme au moins en partie la zone de contact thermique avec l'écran ;
- ledit écran est directement en contact avec le réflecteur ;
- le réflecteur est fermé d'un côté par ledit écran, de l'autre par (un support de) la source de lumière, de sorte que ledit dispositif de génération d'images forme une enceinte close ;
- une face externe du réflecteur est pourvue d'une pluralité d'ailettes de dissipation thermique ;
- les ailettes de dissipation thermique et le réflecteur sont en une seule pièce ;
- le réflecteur, et éventuellement les ailettes de dissipation thermique, sont réalisés en un matériau métallique ;
- le réflecteur, et éventuellement les ailettes de dissipation thermique, sont réalisés en un matériau polymère, par exemple un matériau polymère chargé ;
- les ailettes de dissipation thermique couvrent au moins 15% de ladite face externe du réflecteur ;
- les ailettes de dissipation thermique couvrent au moins 30% de ladite face externe du réflecteur ;
- les ailettes de dissipation thermique s'étendent sur toute la hauteur de la portion de réflexion du réflecteur ;
- les ailettes de dissipation thermique s'étendent chacune dans une direction globalement perpendiculaire à l'axe principal d'extension du réflecteur, parallèlement les unes par rapport aux autres ;
- les ailettes de dissipation thermique sont agencées selon une pluralité de colonnes de dissipation thermique ;
- le réflecteur présente une conductivité thermique supérieure à 10 W.m⁻1.K⁻¹;
- il est prévu un radiateur thermique disposé à l'arrière de la source de lumière ;
- il est prévu d'isoler thermiquement le réflecteur et un support de la source de lumière.

L'invention propose également un afficheur tête haute comprenant un dispositif de génération d'images tel que décrit précédemment et un dispositif de projection d'images adapté à transmettre en direction d'une lame semi-transparente les images générées par le dispositif de génération d'images.

Dans l'afficheur tête haute conforme à l'invention, le dispositif de projection d'images comprend un miroir agencé de manière à réfléchir en direction de la lame semi-transparente les images générées par le dispositif de génération d'images.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'un afficheur tête haute selon l'invention en position dans le véhicule ; et,
- la figure 2 est une représentation schématique en coupe d'un dispositif de génération d'images selon l'invention.

Dans la suite de la description, les termes « avant » et « arrière » seront utilisés pour désigner les éléments en position dans le véhicule automobile, par rapport à la direction longitudinale dudit véhicule automobile. L'avant désignera le côté d'un élément dirigé vers le conducteur, autrement dit le côté tourné vers le coffre, et l'arrière désignera le côté de cet élément tourné vers le capot.

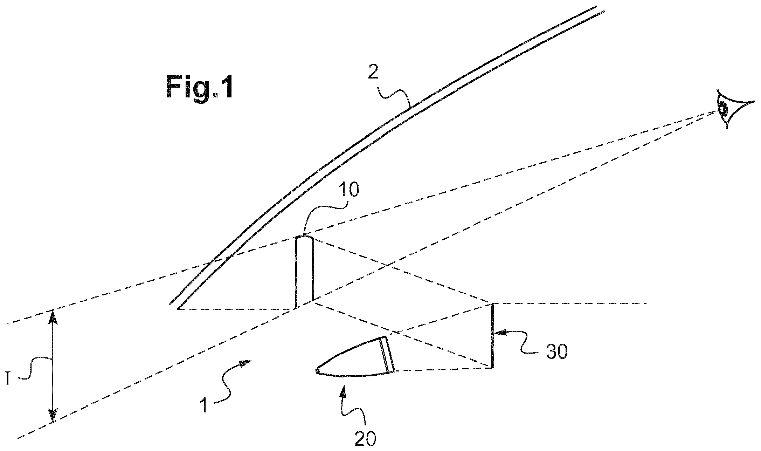

Sur la figure 1, on a représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard de la route.

A cet effet, l'afficheur 1 comprend une lame semi-transparente 10 placée dans le champ de vision du conducteur (voir figure 1), un dispositif de génération d'images 20 adapté à générer des images et un dispositif de projection 30 d'images adapté à transmettre en direction de ladite lame semi-transparente 10 les images générées par l'unité de génération d'images 20.

Plus précisément, la lame semi-transparente 10 est ici un combineur 10, c'est-à-dire une lame semi-transparente dédiée à l'afficheur tête haute 1.

Un tel combineur 10 est ici placé entre le parebrise 2 du véhicule et les yeux du conducteur.

En variante, la lame semi-transparente peut être confondue avec le parebrise du véhicule. Autrement dit, dans cette variante, c'est le parebrise du véhicule qui a la fonction de lame-semi transparente pour l'afficheur tête haute.

Par ailleurs, ici, le dispositif de projection 30 d'images comprend un miroir de repliement agencé de manière à réfléchir les images générées par le dispositif de génération 20 d'images en direction de la lame semi-transparente 10. Ici, ledit miroir de repliement est un miroir plan.

En variante, le dispositif de projection d'images peut comprendre une pluralité de miroirs et/ou d'autres éléments optiques tels qu'une lentille par exemple.

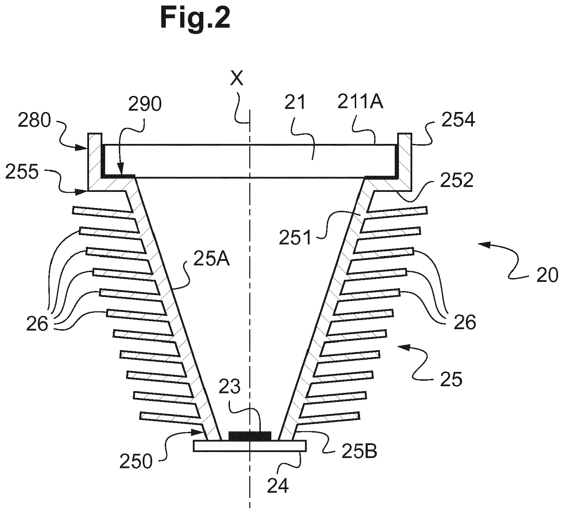

Sur la figure 2, on a représenté plus précisément le dispositif de génération 20 d'images de l'afficheur tête haute 1 en coupe.

Ce dispositif de génération 20 d'images comprend ici au moins une source de lumière 23, un écran 21 rétroéclairé par cette source de lumière 23, et un réflecteur 25.

Dans l'exemple représenté, le dispositif de génération 20 d'images comprend en réalité une pluralité de sources de lumière 23 montées sur un support 24.

Les sources de lumières 23 sont ici alignées perpendiculairement au plan de coupe de la figure 2.

Plus précisément, chaque source de lumière 23 est ici une diode électroluminescente (ou LED pour « Light Emitting Diode »), et l'ensemble de ces LEDs est monté sur un circuit imprimé jouant le rôle de support 24.

On propose ici de disposer les LEDs sous forme d'une unique rangée d'une pluralité de sources de lumière 23, comprenant ici quatre sources de lumière 23. En variante, on peut par exemple envisager que la pluralité de sources de lumière comprenne entre deux et vingt sources de lumière, par exemple disposées sur une ou deux rangées.

Les sources de lumières 23 sont ici adaptées à rétroéclairer l'écran 21, ledit écran 21 étant placé à distance d'elles. Autrement dit, l'écran 21 est éclairé, sur sa face arrière par les sources de lumière 23.

Dans l'exemple de réalisation proposé, l'écran 21 est un écran à cristaux liquides (ou LCD pour "Liquid Crystal Display"), par exemple à transistors en couche mince (ou TFT pour "Thin-Film Transistor").

Il comprend une matrice d'éléments de transmittance variable adaptés à former les pixels d'une image à afficher lorsqu'ils sont rétroéclairés par les sources de lumière 23.

Ici, l'écran 21 comporte une face avant 211A globalement plane.

Le réflecteur 25 est disposé entre les sources de lumière 23 et l'écran 21 de manière à réfléchir au moins en partie la lumière émise par les sources de lumière 23 en direction de l'écran 21.

En pratique, le réflecteur 25 s'étend selon un axe principal X d'extension et comporte une portion de réflexion 250.

La portion de réflexion 250 présente une forme globalement évasée, ou tronconique, depuis les sources de lumière vers l'écran 21.

Elle comporte à cet effet quatre parois 251 se faisant face deux à deux, et qui s'étendent légèrement à l'oblique par rapport à l'axe principal X d'extension, depuis les sources de lumière 23 vers l'écran 21.

Dans l'exemple représenté ici, les quatre parois 251 sont planes. En variante, les parois peuvent prendre toute forme particulièrement adaptée à réfléchir le maximum de lumière vers l'écran.

Les quatre parois 251 sont jointives de sorte que la portion de réflexion 250 présente, à une extrémité, une première ouverture où sont logées les sources de lumière 23, et, à l'autre extrémité, une deuxième ouverture (de surface supérieure à celle de la première ouverture) du côté de laquelle est placé l'écran 21.

En pratique, c'est une face interne 25A du réflecteur 25 qui réfléchit au moins en partie la lumière émise par les sources de lumière 23.

A cet effet, la face interne 25A de la portion de réflexion 250 du réflecteur 25 présente un coefficient de réflexion élevé. Elle peut par exemple être de couleur blanche de manière à engendrer une réflexion diffuse. Elle peut en variante être recouverte d'une couche réfléchissante (par exemple de chrome ou d'aluminium) de manière à engendrer une réflexion spéculaire.

Ainsi, tant la forme que le matériau de la face interne du réflecteur 25 sont ici adaptés à réfléchir l'ensemble des rayons lumineux émis par les sources de lumière 23 en direction de l'écran 21.

En outre, de manière avantageuse, le réflecteur 25 définit un logement 280 conçu pour recevoir l'écran 21 de sorte que ledit réflecteur 25 présente une zone de contact thermique 290 avec ledit écran 21.

Le réflecteur 25 comporte à cet effet une portion de support 255 adaptée à supporter et loger l'écran 21, et à créer un contact thermique avec ce dernier.

En pratique, la portion de support 255 d'écran s'étend à partir de la deuxième ouverture de la portion de réflexion 250 du réflecteur 25.

Plus précisément, chaque paroi 251 de la portion de réflexion 250 du réflecteur 25 est ici prolongée par un méplat 252 qui s'étend vers l'extérieur dudit réflecteur 25. Ici, les méplats s'étendent dans un plan globalement parallèle au support 24 des sources de lumière 23.

Les méplats 252 sont adaptés à accueillir l'écran 21, tel que cela est représenté en figure 2.

Chaque méplat 252 est lui-même prolongé par un rebord 254, qui s'étend globalement perpendiculairement audit méplat 252 correspondant, en s'éloignant des sources de lumière 23.

Ainsi, chaque rebord 254 est ici globalement parallèle à l'axe principal X d'extension du réflecteur 25.

La portion de support 255 du réflecteur 25 est ainsi formée par les quatre méplats 252 et par les quatre rebords 254 prolongeant les quatre parois 251.

La portion de support 255 définit ainsi le logement 280 de réception de l'écran 21.

Plus précisément, les rebords 254 de la portion de support 255 entourent l'écran 21 en formant un cadre autour dudit écran 21 lorsque ce dernier est au contact des méplats 252 dudit réflecteur 25.

Grâce à la portion de support 255 du réflecteur 25, l'écran 21 est intégré au réflecteur 25, ce qui engendre un gain de place pour l'afficheur tête haute 1. Le dispositif de génération d'images est ainsi plus facilement intégrable dans une planche de bord de véhicule automobile.

De manière avantageuse, le réflecteur 25 est fermé, d'un côté par l'écran 21, et de l'autre côté par les sources de lumière 23 (à savoir en pratique par le support 24 des sources de lumière 23).

Ainsi, le dispositif de génération 20 d'images forme une enceinte close.

Avantageusement, les éléments internes du dispositif de génération d'images sont alors protégés des poussières ou autres agressions extérieures.

L'enceinte close assure également qu'aucun rayon parasite ne sera émis depuis les sources de lumière 23 directement en direction des autres éléments de l'afficheur tête haute 1. Autrement dit, le miroir de repliement 30 et/ou la lame semi-transparente 10 ne recevront du dispositif de génération 20 d'images que les rayons ayant traversé l'écran 21.

La zone de contact thermique 290 entre l'écran 21 et le réflecteur 25 est située sur une périphérie d'au moins une des faces dudit écran 21.

Ici, la zone de contact thermique 290 est située sur toute la périphérie de la face arrière de l'écran 21. Avantageusement, cela permet de transmettre plus facilement au réflecteur 25 la chaleur accumulée dans ledit écran 21, cette chaleur étant d'abord accumulée sur la face arrière de l'écran 21 puisqu'elle provient du flux de lumière rétroéclairant l'écran 21.

En pratique, la zone de contact thermique 290 est ici située au niveau des méplats 252 du réflecteur 25, ces derniers étant en contact thermique avec la face arrière de l'écran 21.

Ici, l'écran 21 est directement en contact avec la portion de support 255 du réflecteur 25.

Autrement dit, on prévoit ici que le contact thermique soit un contact physique entre l'écran 21 et le réflecteur 25. A cet effet, l'écran 21 et les méplats 252 de la portion de support 255 du réflecteur 25 sont prévus pour être parfaitement jointifs, c'est-à-dire pour être en contact physique, sans couche d'air intermédiaire.

En variante, on peut prévoir que l'écran et le réflecteur soient en contact thermique par l'intermédiaire d'un pont thermique.

En outre, de manière remarquable, une face externe 25B dudit réflecteur 25 est pourvue d'une pluralité d'ailettes 26 de dissipation thermique.

Ainsi, avantageusement, le réflecteur 25 sert de dissipateur (ou radiateur) thermique à l'écran 21 dans la mesure où il est adapté à évacuer la chaleur qui est accumulée dans l'écran 21 (cette chaleur étant due à l'absorption, par l'écran, d'une partie de la lumière le rétroéclairant).

Les ailettes 26 de dissipation thermique sont implantées sur la face externe 25B de réflecteur 25 de manière à couvrir au moins 15% de cette face externe 25B.

Autrement dit, si les ailettes 26 de dissipation thermique étaient toutes regroupées de façon contigüe, dans une unique région de la face externe 25B du réflecteur 25, cette région représenterait au moins 15% de la face externe 25B totale du réflecteur 25.

De préférence, les ailettes 26 de dissipation thermique sont implantées sur la face externe 25B du réflecteur 25 de manière à couvrir au moins 30% de cette face externe 25B.

Plus précisément, les ailettes 26 de dissipation thermique sont ici regroupées en au moins deux paquets d'ailettes sur la face externe 25B du réflecteur 25. Dans chaque paquet d'ailettes, les ailettes 26 de dissipation thermique sont séparées les unes des autres par une fine couche d'air. Ici, la distance séparant deux paquets consécutifs est supérieure à la distance séparant deux ailettes 26 consécutives d'un même paquet.

En pratique, les ailettes 26 de dissipation thermique s'étendent ici sur toute la hauteur du réflecteur 25. Elles sont réparties sur l'ensemble des quatre parois 251 de la portion de réflexion 250 du réflecteur 25.

Selon le mode de réalisation présenté sur la figure 2, chaque paquet d'ailettes 26 prend la forme d'une colonne d'ailettes 26. Le réflecteur 25 comprend ici quatre colonnes d'ailettes. Ces colonnes sont réparties face à face sur chaque paroi 251 du réflecteur 25. En variante, on peut envisager que les ailettes forment des colonnes réparties en quinconce sur la face externe du réflecteur.

En variante, on peut envisager que les ailettes soient réparties individuellement de façon aléatoire sur la face externe du réflecteur. Dans cette variante, on ne parle alors plus de paquets d'ailettes.

Ici, les ailettes 26 de dissipation thermique s'étendent chacune dans une direction globalement perpendiculaire à l'axe principal X d'extension du réflecteur 25, parallèlement les unes par rapport aux autres.

La surface de chaque ailette 26 est optimisée pour minimiser l'encombrement du réflecteur tout en maximisant le contact avec l'air entourant le réflecteur 25.

Avantageusement, grâce aux ailettes 26, la surface de contact de l'air avec le réflecteur 25 est agrandie.

Ainsi, par un effet de conduction thermique, la chaleur contenue dans l'écran 21 est susceptible d'être évacuée dans l'air par l'intermédiaire du réflecteur 25. Pour ce faire, le réflecteur 25 est adapté à drainer la chaleur contenue dans l'écran 21 et à répartir cette chaleur sur toute sa surface, c'est-à-dire dans les quatre parois 251 et dans la pluralité d'ailettes 26 qu'il comprend. Les ailettes 26 de dissipation thermique étant en contact avec l'air, la chaleur peut ensuite être évacuée dans l'air, par conduction et/ou rayonnement, puis éventuellement par convection.

En pratique, les ailettes 26 et le réflecteur 25 sont d'un seul tenant. Plus précisément, ici, les ailettes 26 et le réflecteur 25 sont en une seule pièce.

Pour que le réflecteur 25 puisse supporter l'écran 21 tout en assurant une conduction thermique efficace, le réflecteur 25 (ici muni de ses ailettes 26 de dissipation thermique) est réalisé en un matériau à la fois rigide et bon conducteur de chaleur (matériau avec une conductivité thermique supérieure à 1 W.m⁻¹.K⁻¹ et de préférence supérieure à 10 W.m⁻¹.K⁻¹), c'est-à-dire adapté à drainer la chaleur depuis l'écran 21 vers les parois 251 du réflecteur 25.

Ainsi, ici, le réflecteur 25 (muni dans l'exemple décrit de ses ailettes 26 de dissipation thermique) est réalisé en un matériau métallique tel qu'un alliage métallique, par exemple en Aluminium (ayant une conductivité thermique supérieure à 200 W.m⁻¹.K⁻¹, généralement de l'ordre de 230 W.m⁻¹.K⁻¹) ou en Zamak (aussi appelé Zamac).

En variante, le réflecteur (éventuellement muni de ses ailettes de dissipation thermique) peut être réalisé en un matériau polymère rigide (ayant de préférence une conductivité thermique supérieure à 10 W.m⁻¹.K⁻¹), par exemple un matériau polymère chargé tel que le Makrolon TC8030 (polycarbonate thermo-conducteur).

On entend par polymère chargé un matériau composite à base de polymère (par exemple polycarbonate) comprenant également un matériau complémentaire permettant d'obtenir une bonne conductivité thermique (typiquement une conductivité thermique supérieure à 1 W.m⁻¹.K⁻¹, voire à 10 W.m⁻1.K⁻¹).

Ainsi, le réflecteur 25, éventuellement muni des ailettes 26 de dissipation thermique, permet de refroidir efficacement l'écran 21 et/ou évite l'échauffement dudit écran 21. Le conducteur du véhicule peut alors obtenir le niveau de luminosité qu'il désire pour l'image virtuelle vue grâce à la lame semi-transparente 10.

En pratique, le réflecteur 25, muni de sa portion de support 255 et de ses ailettes 26 de dissipation thermique, est fabriqué par moulage.

Plus précisément, chaque paroi 251 est moulée avec, sur sa face externe, les ailettes 26 de dissipation thermique répartie en au moins une colonne, et à son extrémité la plus large, le méplat 252 prolongé par le rebord 254.

Chaque paroi 251 forme alors une seule pièce avec les ailettes 26, le méplat 252 et le rebord 254 correspondants.

Les parois 251 sont ensuite assemblées entre elles de façon jointive pour former le réflecteur 25. Un tel assemblage est réalisé par collage ou par soudage selon le matériau utilisé pour mouler les parois.

La face interne 25A du réflecteur 25 peut ensuite être peinte ou recouverte d'une couche réfléchissante.

En variante, on peut envisager que chaque paroi soit moulée sans les ailettes, uniquement avec le méplat prolongé par le rebord. Les parois seraient ensuite assemblées entre elles, et les ailettes collées, à l'aide d'une colle adaptée à transmettre la chaleur, ou soudées, à la face externe du réflecteur.

En variante encore, le réflecteur muni de ses parois, de ses ailettes de dissipation thermique et de sa portion de support, est réalisé en une seule pièce, grâce à un moule adapté dans lequel on injecte ledit matériau rigide et bon conducteur de chaleur.

Le réflecteur 25 ainsi obtenu est donc adapté à remplir plusieurs fonctions, à savoir, sa fonction première de réflecteur, celle de support d'écran et également celle de radiateur thermique.

En variante, on peut prévoir d'ajouter au dispositif de génération d'images un radiateur à dissipation thermique placé à l'arrière du support des sources de lumière, de manière à dissiper en partie la chaleur générée par lesdites sources de lumière. Un tel radiateur à dissipation thermique est par exemple un ventilateur. On peut également, notamment lorsqu'on utilise une technique de montage direct de la puce (ou « *On Chip Board* »), utiliser, en tant que support, le dissipateur thermique usuellement associé aux sources de lumière.

Avantageusement, dans cette variante, le réflecteur et le support sont en contact thermique, de sorte que le radiateur à dissipation thermique des sources de lumière est également adapté à dissiper la chaleur du réflecteur, en sus des ailettes. L'effet combiné du réflecteur et du radiateur à dissipation thermique permet d'améliorer encore le refroidissement de l'écran.

En variante encore, on peut prévoir d'isoler thermiquement le support des sources de lumière et le réflecteur, de sorte que le support ne puisse pas transmettre de chaleur au réflecteur, et inversement.

Selon une autre variante, on peut envisager que chaque rebord de la portion de support du réflecteur soit prolongé par un deuxième méplat, s'étendant parallèlement au premier méplat déjà prévu. Ainsi, l'écran serait pris en sandwich entre les deux méplats et le rebord, et la zone de contact thermique entre l'écran et le réflecteur serait agrandie.

## Revendications

1. Dispositif de génération (20) d'images comprenant :
- au moins une source de lumière (23),
- un écran (21) adapté à être rétroéclairé par ladite source de lumière (23), et
- un réflecteur (25) disposé entre ladite source de lumière (23) et ledit écran (21) de sorte qu'une face interne (25A) dudit réflecteur (25) réfléchisse au moins en partie la lumière émise par la source de lumière (23),
**caractérisé en ce que** le réflecteur (25) présente une conductivité thermique supérieure à 1 W.m⁻¹.K⁻¹.

2. Dispositif de génération (20) d'images selon la revendication 1, dans lequel le réflecteur (25) définit en outre un logement (280) conçu pour recevoir l'écran (21) de sorte que ledit réflecteur (25) présente une zone de contact thermique (290) avec ledit écran.

3. Dispositif de génération (20) d'images selon la revendication 2, dans lequel le réflecteur (25) s'étend selon un axe principal (X) d'extension et comporte une portion de réflexion (250) et une portion de support (255), ladite portion de support (255) définissant ledit logement (280) conçu pour recevoir l'écran (21) et comportant :
- un méplat (252) formant au moins en partie la zone de contact thermique (290) avec l'écran (21), et
- un rebord (254) qui s'élève à partir dudit méplat (252) de manière à entourer l'écran (21).

4. Dispositif de génération (20) d'images selon l'une des revendications 1 à 3, dans lequel ledit écran (21) est directement en contact avec le réflecteur (25).

5. Dispositif de génération (20) d'images selon l'une des revendications 1 à 4, dans lequel le réflecteur (25) est fermé d'un côté par ledit écran (21), de l'autre par un support (24) de la source de lumière (23), de sorte que ledit dispositif de génération (20) d'images forme une enceinte close.

6. Dispositif de génération (20) d'images selon l'une des revendications 1 à 5, dans lequel une face externe (25B) dudit réflecteur (25) est pourvue d'une pluralité d'ailettes (26) de dissipation thermique.

7. Dispositif de génération d'images selon la revendication 6, dans lequel les ailettes (26) de dissipation thermique et le réflecteur (25) sont en une seule pièce.

8. Dispositif de génération (20) d'images selon la revendications 6 ou 7, dans lequel les ailettes (26) de dissipation thermique couvrent au moins 15% de ladite face externe (25B) du réflecteur (25)

9. Dispositif de génération (20) d'images selon l'une des revendications 1 à 8, dans lequel le réflecteur (25) est réalisé en un matériau métallique.

10. Dispositif de génération (20) d'images selon l'une des revendications 1 à 8, dans lequel le réflecteur (25) est réalisé en un matériau polymère chargé.

11. Afficheur tête haute (1) comprenant un dispositif de génération (20) d'images selon l'une des revendications 1 à 10 et un dispositif de projection (30) d'images adapté à transmettre en direction d'une lame semi-transparente (10) les images générées par le dispositif de génération (20) d'images.

12. Afficheur tête haute (1) selon la revendication 11, dans lequel le dispositif de projection (30) d'images comprend un miroir (30) agencé de manière à réfléchir en direction de la lame semi-transparente (10) les images générées par le dispositif de génération (20) d'images.

## Patentansprüche

1. Bilderzeugungsvorrichtung (20), umfassend:
- mindestens eine Lichtquelle (23),
- einen Bildschirm (21), der geeignet ist, von der Lichtquelle (23) hinterleuchtet zu werden, und
- einen Reflektor (25), der zwischen der Lichtquelle (23) und dem Bildschirm (21) angeordnet ist, so dass eine Innenseite (25A) des Reflektors (25) das von der Lichtquelle (23) ausgesandte Licht zumindest teilweise reflektiert,
**dadurch gekennzeichnet, dass** der Reflektor (25) eine Wärmeleitfähigkeit von mehr als 1 W.m⁻¹.K⁻¹ aufweist.

2. Bilderzeugungsvorrichtung (20) nach Anspruch 1, bei welcher der Reflektor (25) ferner eine Aufnahme (280) definiert, die dazu ausgelegt ist, den Bildschirm (21) so aufzunehmen, dass der Reflektor (25) einen thermischen Kontaktbereich (290) mit dem Bildschirm aufweist.

3. Bilderzeugungsvorrichtung (20) nach Anspruch 2, bei der sich der Reflektor (25) entlang einer Haupterstreckungsachse (X) erstreckt und einen Reflexionsabschnitt (250) und einen Halterungsabschnitt (255) beinhaltet, wobei der Halterungsabschnitt (255) die Aufnahme (280) definiert, die zum Aufnehmen des Bildschirms (21) ausgelegt ist, und beinhaltet:
- ein Flachstück (252), das zumindest teilweise den thermischen Kontaktbereich (290) mit dem Bildschirm (21) bildet, und
- eine Einfassung (254), die sich ausgehend von dem Flachstück (252) derart erhebt, dass sie den Bildschirm (21) umgibt.

4. Bilderzeugungsvorrichtung (20) nach einem der Ansprüche 1 bis 3, bei welcher der Bildschirm (21) mit dem Reflektor (25) direkt in Kontakt ist.

5. Bilderzeugungsvorrichtung (20) nach einem der Ansprüche 1 bis 4, bei welcher der Reflektor (25) auf einer Seite durch den Bildschirm (21) verschlossen wird, auf der anderen durch eine Halterung (24) der Lichtquelle (23), so dass die Bilderzeugungsvorrichtung (20) einen geschlossenen Raum bildet.

6. Bilderzeugungsvorrichtung (20) nach einem der Ansprüche 1 bis 5, bei der eine Außenseite (25B) des Reflektors (25) mit einer Mehrzahl von Wärmeableitungsrippen (26) versehen ist.

7. Bilderzeugungsvorrichtung nach Anspruch 6, bei der die Wärmeableitungsrippen (26) und der Reflektor (25) einstückig sind.

8. Bilderzeugungsvorrichtung (20) nach Anspruch 6 oder 7, bei der die Wärmeableitungsrippen (26) mindestens 15 % der Außenseite (25B) des Reflektors (25) bedecken.

9. Bilderzeugungsvorrichtung (20) nach einem der Ansprüche 1 bis 8, bei welcher der Reflektor (25) aus einem metallischen Werkstoff ausgeführt ist.

10. Bilderzeugungsvorrichtung (20) nach einem der Ansprüche 1 bis 8, bei welcher der Reflektor (25) aus einem gefüllten Polymerwerkstoff ausgeführt ist.

11. Head-up-Display (1), das eine Bilderzeugungsvorrichtung (20) nach einem der Ansprüche 1 bis 10 umfasst und eine Bildprojektionsvorrichtung (30), die geeignet ist, die von der Bilderzeugungsvorrichtung (20) erzeugten Bilder in Richtung eines halbtransparenten Plättchens (10) zu übertragen.

12. Head-up-Display (1) nach Anspruch 11, bei dem die Bildprojektionsvorrichtung (30) einen Spiegel (30) umfasst, der so eingerichtet ist, dass er die von der Bilderzeugungsvorrichtung (20) erzeugten Bilder in Richtung des halbtransparenten Plättchens (10) reflektiert.

## Claims

1. Image-generating device (20) comprising:
- at least one light source (23),
- a screen (21) adapted to be backlit by said light source (23), and
- a reflector (25) arranged between said light source (23) and said screen (21) in such a way that an inner face (25A) of said reflector (25) at least partly reflects the light emitted by the light source (23), **characterized in that** the reflector (25) has a thermal conductivity greater than 1 W.m⁻¹.K⁻¹.

2. Image-generating device (20) according to Claim 1, wherein the reflector (25) also defines a recess (280) designed to receive the screen (21) in such a way that said reflector (25) has a zone of thermal contact (290) with said screen.

3. Image-generating device (20) according to Claim 2, wherein the reflector (25) extends along a main axis (X) of extension and comprises a reflection portion (250) and a support portion (255), said support portion (255) defining said recess (280) designed to receive the screen (21) and comprising:
- a flat (252) at least partly forming the zone of thermal contact (290) with the screen (21), and
- a rim (254) which rises from said flat (252) so as to surround the screen (21).

4. Image-generating device (20) according to one of Claims 1 to 3, wherein said screen (21) is directly in contact with the reflector (25).

5. Image-generating device (20) according to one of Claims 1 to 4, wherein the reflector (25) is closed on one side by said screen (21), on the other by a support (24) of the light source (23), such that said image-generating device (20) forms a closed enclosure.

6. Image-generating device (20) according to one of Claims 1 to 5, wherein an outer face (25B) of said reflector (25) is provided with a plurality of heat-dissipation fins (26).

7. Image-generating device according to Claim 6, wherein the heat-dissipation fins (26) and the reflector (25) are of a single piece.

8. Image-generating device (20) according to Claim 6 or 7, wherein the heat-dissipation fins (26) cover at least 15% of said outer face (25B) of the reflector (25).

9. Image-generating device (20) according to one of Claims 1 to 8, wherein the reflector (25) is produced in a metal material.

10. Image-generating device (20) according to one of Claims 1 to 8, wherein the reflector (25) is produced in a filled polymer material.

11. Head-up display (1) comprising an image-generating device (20) according to one of Claims 1 to 10 and an image-projecting device (30) adapted to transmit to a semi-transparent plate (10) the images generated by the image-generating device (20).

12. Head-up display (1) according to Claim 11, wherein the image-projecting device (30) comprises a mirror (30) arranged so as to reflect to the semi-transparent plate (10) the images generated by the image-generating device (20).
